# EUROPÄISCHE PATENTSCHRIFT

(11) **EP 1 398 719 B1**
(45) Veröffentlichungstag und Bekanntmachung des Hinweises auf die Patenterteilung: **22.12.2004**
(21) Anmeldenummer: 02405805.9
(22) Anmeldetag: 16.09.2002
(51) Int. Cl.: G06F 17/60

(54) **Computergestütztes Fahrzeugreservationssystem und Verfahren für ein computergestütztes Fahrzeugreservationssystem**
Computer supported vehicle reservation system and method for a computer supported vehicle reservation system
Système informatique de réservation de véhicule et procédé pour un système informatique de réservation de véhicule

(43) Veröffentlichungstag der Anmeldung: 17.03.2004
(73) Patentinhaber: Swisscom AG, 3000 Bern 29 (CH)
(72) Erfinder: Leimgruber, Urs, 3123 Belp (CH); Ulrich, Hans A., 3053 Münchenbuchsee (CH); Kamber, Christoph G., 2540 Grenchen (CH)
(74) Vertreter: BOVARD AG - Patentanwälte

(56) Entgegenhaltungen:
- EP-A- 1 128 350
- WO-A-01/43464
- CA-A- 2 227 664
- FR-A- 2 801 994
- FR-A- 2 819 958
- US-A1- 2002 099 574
- UWE LATSCH: "Technological and Operational Support for Car sharing" TOSCA CAR SHARING SYSTEM, [Online] Nr. 2.1, 15. Juni 2001 (2001-06-15), Seiten 1-21, XP002230275 Gefunden im Internet: <URL:http://www.atc.bo.it/progetti/tosca/d eliverable%202-1finalemarzo2002.pdf> [gefunden am 2003-02-06]

## Beschreibung

Die vorliegende Erfindung betrifft ein computergestütztes Fahrzeugreservationssystem sowie ein Verfahren für ein computergestütztes Fahrzeugreservationssystem, bei welchem sich ein Benutzer bei einem Identifikationsmodul identifiziert, das Identifikationsmodul die Identifikation bei einer Zentraleinheit überprüft und das Fahrzeug bei erfolgter Identifikation des Benutzers über ein Onboardsystem des Fahrzeuges zur Benutzung freigegeben wird.

Es gibt heute viele bekannte Vermietungsfirmen zum Mieten von Autos oder diversen anderen Fahrzeugen. Die Vermietung erfolgt üblicherweise an dafür vorgesehenen Abgabe- und Annahmestellen des Vermieters, bei welchen der Kunde ein Fahrzeug mieten kann und das gemietete Fahrzeug beziehen kann. Der Vorgang der Fahrzeugvermietung erfordert heute durchwegs noch die Bereitstellung eines Fahrzeuges für einen vorgemerkten Kunden, da der Vermieter möglichst viele seiner Fahrzeuge gleichzeitig vermieten möchte, d.h. seinen Fuhrpark optimal auslasten möchte. Die dafür notwendigen Reservierungen werden durch firmenspezifische Buchungszentralen durchgeführt. Sind an einer Mietstation bzw. einer Abgabe- und Annahmestelle mit angeschlossenem Fahrzeugpark, wie z.B. an Flughäfen, noch Fahrzeuge frei verfügbar, können diese auch direkt vor Ort gemietet werden. Nach der Benutzung des Fahrzeuges bzw. nach Ablauf der vereinbarten Mietdauer muss der Kunde das Fahrzeug ebenfalls wieder an einer der Abgabe- und Annahmestellen des Vermieters zurückgeben. Die Mietdauer eines Fahrzeuges beträgt typischerweise einige Tage bis einige Wochen. Zu den Mietformalitäten gehören beispielsweise das Ausfüllen von Formularen mit kundenspezifischen Daten, wie z.B. ID-Nummer des Führerscheins, Gültigkeit und Gültigkeitsdauer des Führerscheins, Adresse, Geburtsdatum, Kreditkarten-Nummern etc. Zu den Nachteilen des Standes der Technik gehört u.a., dass der Rückgabeort meist bereits beim Mieten des Fahrzeuges festgelegt werden muss. Ein anderer Nachteil ist der relativ grosse Aufwand an Zeit, Personal und Kosten, die für das Vermieten aufgewendet werden muss. In den US-Patentschriften US 5289369 und 5124920 werden Systeme beschreiben, die eine Halbautomatisierung der Autovermietung erlauben. In diesen Systemen können die Fahrzeuge jeweils mit einer Positionsbestimmung, wie z.B. einem GPS (Global Positioning System) ausgerüstet sein, welches Positionsdaten der verfügbaren Fahrzeuge über Funk an eine Verwaltungseinheit übermittelt. In diesen Systemen können die Fahrzeuge zusätzlich mit einem Identifikationsmodul ausgestattet sein, bei welchem Berechtigungsdaten, die auf einer Chipkarte, wie z.B. eine Smartcard, gespeichert sind, überprüft werden und bei entsprechenden Daten das Fahrzeug zur Benutzung freigegeben wird. Obwohl der letztaufgeführte Stand der Technik einige der Probleme ansatzweise löst, bleiben die genannten Nachteile im Wesentlichen erhalten. Zwar ergibt sich durch diese Systeme eine Halbautomatisierung der Vermietung, trotzdem ist der Kosten- und Personalaufwand für den Vermieter immer noch beträchtlich. So müssen die Mietformalitäten weiterhin durch den Vermieter mit dem Kunden zusammen erledigt werden. Die Mietformalitäten beinhalten im Falle einer Identifikation mittels Chipkarten zusätzlich die Abgabe solcher Karten. Die Chipkarten haben weiter den Nachteil, dass die Kosten für die Karten vom Vermieter getragen werden müssen, da er ansonsten nicht konkurrenzfähig mit anderen Vermietsystemen ist. Auch müssen die Chipkarten durch den Vermieter verwaltet und wie gesagt an den Kunden verteilt werden. Andererseits haben die Chipkarten den Nachteil, dass sie von Kunden mitgeführt werden müssen, wenn er das Fahrzeug beziehen will. Dies verlangt nicht nur einen zusätzlichen Aufwand von Seiten des Kunden, sondern ergibt weitere Nachteile. So kann die Sicherheit leicht in betrügerischer Absicht von einem Dritten umgangen werden, wenn der Kunde z.B. die Chipkarte verliert oder ihm die Chipkarte anderweitig abhanden kommt. Der Schutz vor Missbrauch durch Dritte kann deshalb bei dem System je nach Anwendung ungenügend sein. Ein weiterer Nachteil dieses Standes der Technik ist, dass mit den Mietformalitäten auch die Bezahlung, wie z.B. die Zahlungsmodalität, durch den Vermieter geregelt werden muss. Die Patentschrift FR 2 801 994 offenbart ein Verfahren und ein System zur Verwaltung von Fahrzeugen für eine Vielzahl von Benutzern. Bei dem Verfahren identifiziert sich ein Benutzer mittels Mobilfunkgerät bei einer Zentraleinheit und wird von der Zentraleinheit basierend auf dem Standort des Mobilfunkgerätes lokalisiert. Die Zentraleinheit überprüft mittels einer Datenbank die Verfügbarkeit von Fahrzeugen am Ort des Benutzers und schaltet ein bestimmtes Fahrzeug zur Benutzung durch den Benutzer frei. Eine andere Lösung zeigt die Offenlegungsschrift US 2002/0099574 A1 des Standes der Technik. Bei dem Verfahren zur elektronischen Reservierung eines Parkplatzes für ein Fahrzeug verwendet der Fahrer eines Fahrzeuges die Tastatur seines Mobiltelephons, um eine Parkplatz-Anfrage elektronisch an einen Parkplatzreservierungsrechner zu verschicken.

Die Offenlegungsschrift FR-A-2 819 958 offenbart ein Verfahren und ein System zur Reservierung von Fahrzeugen für eine Vielzahl von Benutzern. Bei dem Verfahren identifiziert sich ein Benutzer mittles Mobilfunkgerät oder Internet-Terminal über einen ersten Kommunikationskanal bei einer Zentraleinheit und reserviert ein bei der Zentraleinheit als verfügbar angegebenes Fahrzeug. Die Zentraleinheit sendet daraufhin einen Identifikationscode, der den Benutzer identifiziert, über einen zweiten Kommunikationskanal an das Fahrzeug. Ein Identifikationsmodul, dass sich ausserhalb des Fahrzeugs befindet, prüft die Identität des Benutzers und generiert ein zweiten Identifikationscode. Bei Übereinstimmung der beiden Identifikationscodes wird das Fahrzeug zur Benutzung freigebeben.

Es ist eine Aufgabe dieser Erfindung, ein neues Fahrzeugreservationssystem sowie ein Verfahren für ein Fahrzeugreservationssystem vorzuschlagen, welches die oben beschriebenen Nachteile nicht aufweist. Insbesondere soll das Vermietverfahren die Möglichkeit eines automatischen Verrechnens bieten und ein hoher Stand an Sicherheit vor Missbrauch und Betrug gewährleistet sein, wobei der Fuhrpark optimal ausgenutzt werden soll.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele dadurch erreicht, dass sich ein Benutzer bei einem Identifikationsmodul identifiziert, das Identifikationsmodul die Identifikation bei einer Zentraleinheit überprüft und das Fahrzeug bei erfolgter Identifikation des Benutzers über ein Onboardsystem des Fahrzeuges zur Benutzung freigegeben wird, wobei die Zentraleinheit alle Fahrzeuge des Fahrzeugreservationssystems erfasst und zeitliche und/oder örtliche Verfügbarkeit der einzelnen Fahrzeuge den Fahrzeugen zugeordnet in einer Datenbank abspeichert, wobei sich der Benutzer über die Eingabeelemente einer mit der Zentraleinheit verbundenen Recheneinheit bei der Zentraleinheit identifiziert und ein Fahrzeug für einen bestimmbaren Zeitpunkt und/oder Zeitspanne und/oder Ort reserviert, welches Fahrzeug von der Zentraleinheit als zu dem bestimmbaren Zeitpunkt und/oder Zeitspanne und/oder Ort verfügbar angegeben wird, wobei ein SMS-Modul der Zentraleinheit einen Identifikationscode mittels einer SMS an ein Mobilfunkgerät des Benutzers über ein Mobilfunknetz übermittelt und wobei sich der Benutzer zum bestimmbaren Zeitpunkt und/oder Ort beim Identifikationsmodul mittels dem Identifikationscode der SMS identifiziert, basierend auf welcher Identifikation das Fahrzeug zur Benutzung freigegeben wird. Die oben erwähnte Ausführung hat den Vorteil, dass ein hoher Stand an Sicherheit vor Missbrauch und/oder Betrug durch die Kombination der Bestellung mit einem Idenifikationscode über einen unabhängigen Rückkanal mit hohen Sicherheitsmechanismen gewährleistet werden kann. Insbesondere ist das System sehr benutzerfreundlich, sowohl von Seiten des Benutzers (Kunden), als auch von Seiten des Vermieters, da es keine weiteren Einrichtungen benötigt, als die bereits vorhandenen. So muss der Benutzer keine zusätzlichen Chipkarten o.ä. herumtragen. Durch die in einem Mobilfunkgerät üblicherweise vorhandenen Schutzmechanismen (z.B. Anmelden mit einem PIN-Code), ist der Identifikationscode entsprechend geschützt. Die Gefahr des Verlierens oder Stehlens der Chipkarte ist nicht vorhanden. Für den Vermieter hat das System den Vorteil, dass er z.B. Chipkarten mit dem entsprechenden Kostenaufwand nicht benötigt. Gleichzeitig muss er die Chipkarten oder ähnliche Identifikationsmittel auch nicht verwalten, was den Personalaufwand reduziert. Die Identifikation des Kunden ist z.B. anhand der MSISDN (Mobile Subscriber ISDN)und/oder IMSL (International Mobile Subscriber Identification) vollständig gewährleistet. Weitere Vorteile sind auch, dass die Verwaltung der Fahrzeuge vollständig automatisiert ist, ohne dass der Vermieter das Fahrzeug selber bereitstellen muss oder der Kunde z.B. den Rückgabeort nicht vorgängig festlegen muss.

In einer Ausführungsvariante wird eine Antwort-SMS, die mindestens den Identifikationscode umfasst, zur Bestätigung vom Mobilfunkgerät über das Mobilfunknetz an die Zentraleinheit zurückgeschickt, mittels welcher Antwort-SMS der Benutzer vom Identifikationsmodul identifiziert wird und mittels welcher Zentraleinheit das Fahrzeug zum bestimmten Zeitpunkt und/oder Zeitspanne und/oder Ort zur Benutzung freigegeben wird. Diese Ausführungsvariante hat u.a. den Vorteil, dass die Sicherheit vor Missbrauch und/oder Betrug durch die Wechselseitige Benutzung des Rückkanals mit den entsprechenden Sicherheitsmechanismen weiter erhöht werden kann.

In einer weiteren Ausführungsvariante überprüft die Zentraleinheit mittels SMS vor der Freigabe des Fahrzeuges über das Onboardsystem des Fahrzeuges den Betriebszustand des Fahrzeuges. Diese Ausführungsvariante hat u.a. den Vorteil, dass der Benutzer sicher sein kann, ein voll betriebstüchtiges Fahrzeug zur bestimmten Zeit vorzufinden. So können z.B. Batteriezustand, Ölstand, Benzinfüllung, Reifendruck, Kühlwasserstand etc. mittels des Onboardsystem des Fahrzeuges erfasst und von der Zentraleinheit vorgängig kontrolliert werden. Als Ausführungsvariante dazu kann das Onboardsystem den Betriebszustand des Fahrzeuges insbesondere auch periodisch selbständig und/oder auf Anfrage der Zentraleinheit überprüfen, wobei die Daten der Datenbank der Zentraleinheit damit aktualisiert werden.

In einer Ausführungsvariante übermittelt das SMS-Modul der Zentraleinheit den Identifikationscode innerhalb einer vorgegebenen Zeitspanne vor Beginn der gewünschten Benutzung mittels der genannten SMS an das Mobilfunkgerät des Benutzers. Die Zeitspanne kann z.B. anderhalbtage vor Beginn der Benutzung oder eine ähnliche Zeitdauer betragen. Dies hat u.a. den Vorteil, dass der Benutzer nicht nur innerhalb eines sinnvollen Zeitrahmens vor der Benutzung an die Reservation erinnert werden kann, sondern z.B. kann auch die Gefahr reduziert werden, dass die SMS zwischenzeitlich durch den Benutzer z.B. aus Speichermangel auf der SIM-Karte des Mobilfunkgerätes oder irrtümlicherweise gelöscht wird.

In einer wieder anderen Ausführungsvariante übermittelt die Zentraleinheit dem Benutzer eine Bestätigung der Reservation auf die Recheneinheit. Dies hat u.a. den Vorteil, dass z.B. der Benutzer einen Befeg für seine Reserr vation erhalten kann, welcher ihn an die Einzelheiten der Reservation bzw. der Reservationsbedingungen erinnert und diese bestätigt.

In einer Ausführungsvariante werden Verrechnungsdaten mittels eines Verrechnungsmoduls der Zentraleinheit berechnet und mittels einem Kommunikationsmodul der Zentraleinheit von der Zentraleinheit an einen Dienstanbieter eines Mobilfunknetzes übermittelt, welche Verrechnungsdaten Kostenparameter zum Berechnen von Kostenbeträgen für die vom Benutzer durch das gemietete Fahrzeug bezogenen Leistung umfassen. Diese Ausführungsvariante hat u.a. den Vorteil, dass der Benutzer die bezogenen Leistungen z.B. zusammen mit der monatlichen Abrechnung der Mobilfunknetzgebühren bezahlen kann. Für den Vermieter ist ein hoher Stand an Sicherheit garantiert, ohne dass er selbst die Verrechnung verwalten müsste und die entsprechenden Formalitäten mit Datenerfassung durchführen muss. Dies gibt eine grosse Einsparung an Kosten- und Personalaufwand.

In einer anderen Ausführungsvariante umfasst das SMS weiter Fahrzeugbezeichnung und/oder Ort und/oder Zeitpunkt und/oder Zeitspanne. Diese Ausführungsvariante hat u.a. den Vorteil, dass der Benutzer zusammen mit dem Identifikationscode eine Bestätigung der Mietbedingungen, wie Ort und/oder Zeit und/oder Dauer, erhält.

In einer weiteren Ausführungsvariante ist das Fahrzeug in einem zutrittskontrollierten Bereich geparkt, wobei der Benutzer sich beim Betreten des zutrittskontrollierten Bereichs mittels des Identifikationscodes bei einem ldentifikationsmodul identifiziert. Diese Ausführungsvariante hat u.a. den Vorteil, dass die Sicherheit vor Betrug und/oder Missbrauch weiter erhöht werden kann.

In einer wieder anderen Ausführungsvariante wird das Mobilfunkgerät als Recheneinheit verwendet. Diese Ausführungsvariante hat u.a. den Vorteil, dass ein Benutzer z.B. mittels SMS und/oder GPRS und/oder USSD Datenmeldungen schnell und benutzerfreundlich ein gewünschtes Fahrzeug mieten kann. Durch die Sicherheitsmechanismen des Mobilfunknetzes ist der Benutzer für die Miet- und Zahlungsvereinbarungen genügend identifizierbar. Die Identifikation erfolgt z.B. über die dem Mobilfunkgerät zugeordnete MSISDN oder IMSI. Als Ausführungsvariante kann die MSISDN oder IMSI mittels Anschlusserkennung von der Zentraleinheit erfasst werden.

In einer Ausführungsvariante kommuniziert die Recheneinheit über ein oder mehrere Computernetzwerke mit der Zentraleinheit. Die Computernetzwerke können insbesondere LANs (Local Area Network), WANs (Wide Area Network), Bluetooth, Mobilfunknetze, wie ein terrestrisches Mobilfunknetz, z.B. ein GSM- (Global System for Mobile Communication) oder UMTS-Netz (Universal Mobile Telephone System) und/oder ein oder mehrere Festnetze, z.B. das öffentliche geschaltete Telefonnetz (PSTN), insbesondere aber auch das weltweite Backbone-Netzwerk (Internet) sein. Diese Ausführungsvariante hat u.a. den Vorteil, dass der Benutzer einfach z.B. von seiner Arbeitstation oder seinem PC aus, via Internet oder einem anderen obenerwähnten Computernetzwerk die Bestellung und Reservationen bei dem Vermieter durchführen kann.

In einer weiteren Ausführungsvariante gibt der Benutzer zur Identifikation bei der Zentraleinheit die MSISDN oder IMSI des Mobilfunkgerätes an. Diese Ausführungsvariante hat u.a. den Vorteil, dass der Benutzer durch die Angabe seiner MSISDN bereits vollständig identifizierbar ist, ohne dass der Benutzer andere Zahlencodes und/oder Identifikationsnummern lernen und behalten müsste. Der Rückkanal über das Mobilfunkgerät mittels SMS erlaubt dabei einen hohen Schutz vor Betrug und/oder Missbrauch.

In einer Ausführungsvariante umfasst die Zentraleinheit ein Parkplatzverwaltungsmodul und/oder ein Parkplatzreservationsmodul, wobei bei der Reservation des Fahrzeuges Angaben über einen Zielort mittels der Recheneinheit an die Zentraleinheit übermittelt werden und/oder die SMS Angaben über einen reservierten Parkplatz am Zielort enthält. Diese Ausführungsvariante hat u.a. den Vorteil, dass der Benutzer am Zielort gleichzeitig mit der Reservation des Fahrzeuges einen sicheren Standort für sein Fahrzeug reservieren kann. Damit kann z.B. auch das Risiko verkleinert werden, dass die Fahrzeuge des Fahrzeugreservationssystems durch schlecht gewählte Parkplätze Schäden erhalten. Gleichzeitig kann auch die Überwachung der Fahrzeuge und/oder allfällige Serviceleitungen während der Benutzung vereinfacht und kostengünstiger gemacht werden.

An dieser Stelle soll festgehalten werden, dass sich die vorliegende Erfindung neben dem erfindungsgemässen Verfahren auch auf ein System zur Ausführung dieses Verfahrens bezieht.

Nachfolgend werden Ausführungsvarianten der vorliegenden Erfindung anhand von Beispielen beschrieben. Die Beispiele der Ausführungen werden durch folgende beigelegten Figuren illustriert:

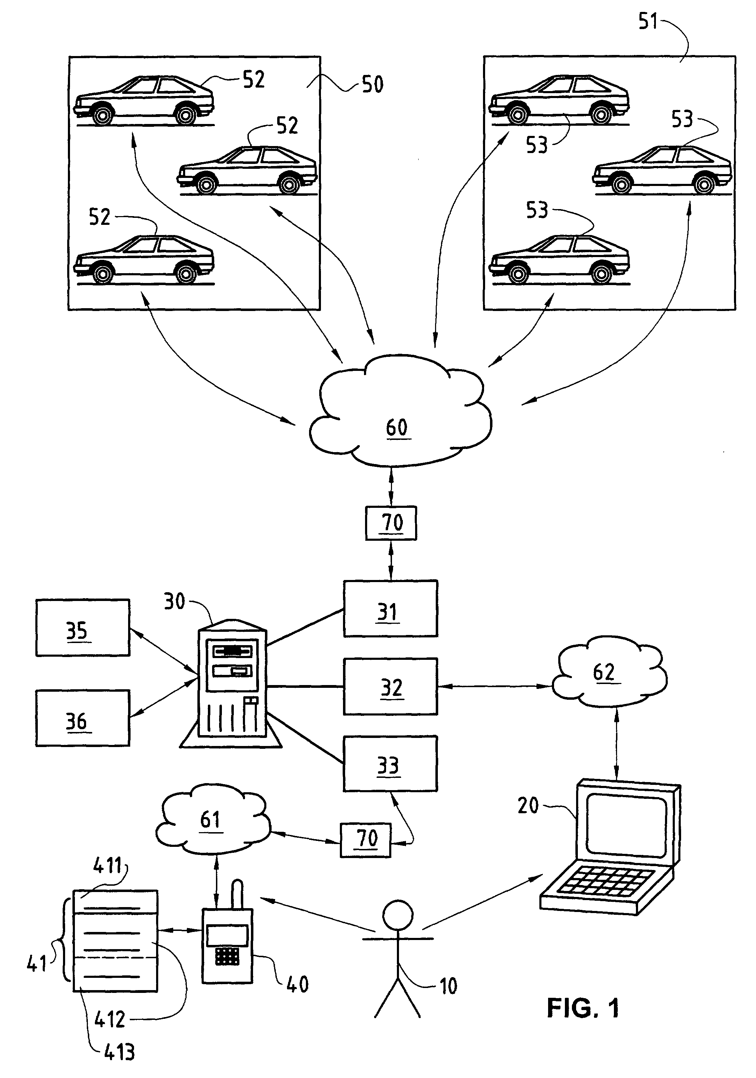

Figur 1 zeigt ein Blockdiagramm, welches schematisch ein erfindungsgemässes computergestütztes Fahrzeugreservationssystem zeigt, bei welchem sich ein Benutzer 10 bei einem Identifikationsmodul identifiziert, wobei das Identifikationsmodul über ein Kommunikationsnetz mit einer Zentraleinheit 30/31 verbunden ist.

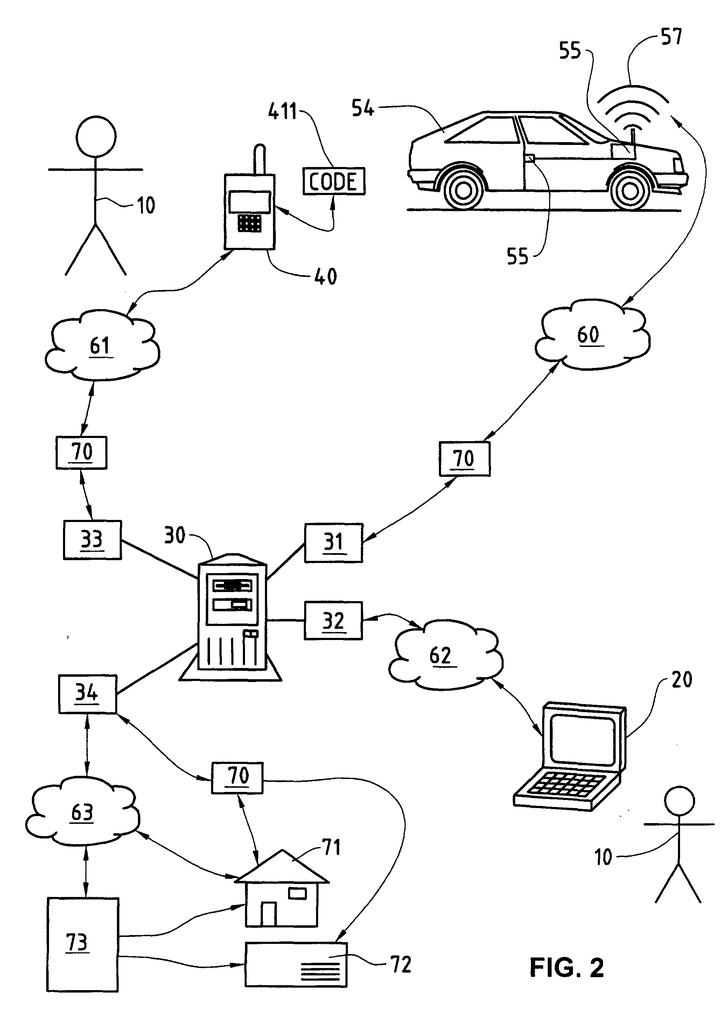

Figur 2 zeigt ein Blockdiagramm, welches ebenfalls schematisch ein erfindungsgemässes computergestütztes Fahrzeugreservationssystem zeigt, bei welchem sich ein Benutzer 10 bei einem Identifikationsmodul eines Fahrzeuges 52/53 identifiziert, wobei die bezogene Leistung mittels eines Verrechnungsmodul 34 der Zentraleinheit 30 über eine Dienstanbieter 70 eines Mobilfunknetzes 63 automatisch verrechnet wird.

Figur 1 und Figur 2 illustrieren ein computergestütztes Fahrzeugreservationssystem bzw. ein Verfahren für ein computergestütztes Fahrzeugreservationssystem, wie sie bei der Realisierung der Erfindung verwendet werden kann. Gleiche Referenznummem in Figur 1 und 2 bezeichnen gleiche Elemente. In diesem Ausführungsbeispiel erfasst eine computergestützte Zentraleinheit 30 alle Fahrzeuge 52/53/54 des Fahrzeugreservationssystems und speichert zeitliche und/oder örtliche Verfügbarkeit der einzelnen Fahrzeuge 52/53/54 den Fahrzeugen 52/53/54 zugeordnet in einer Datenbank eines Fahrzeugparkverwaltungsmoduls 31 ab. Ebenfalls können die Datensätze der Fahrzeuge Daten betreffend ihrer technischen Eigenschaften wie z.B. Fahrzeugtyp, Jahrgang, Kilometerstand, Wartungsperiode, ÖI-/Benzinstand, etc. umfassen. Vermieter der Fahrzeuge 52/53/54 können Fahrzeugvermietungsfirmen, wie z.B. die bekannten Avis, Hertz, Budget etc. sein, aber auch firmeninterne Vermietungs- oder Verteilungabteilungen von Fahrzeugen sein. Natürlich ist die Erfindung nicht auf das Vermieten von Fahrzeugen beschränkt, sondern betrifft Vermiet- und/oder Verleihsysteme im Allgemeinen. Der Fahrzeugpark des Fahrzeugreservationssystems kann Fahrzeuge 52/53/54 jeglichen Typs und Verwendungszweckes umfassen. Jedes Fahrzeug 52/53/54 umfasst Kommunikationsmittel 57, mittels welchen Daten mit der Zentraleinheit 30 über ein Kommunikationsnetz 60 bidirektional übertragbar sind. Die Kommunikationsmittel 57 sind ein Teil eines Onboardsystems 55 jedes Fahrzeuges 52/53/54, das u.a. Mittel (wie z.B. entsprechende Sensoren, Speichermittel etc.) zur Erfassung des Betriebszustand (Ölstand, Kühlwasserstand, Kilometerstand, Benzinstand, Batterieladezustand etc.) des Fahrzeuges 52/53/54 umfassen kann. Das Kommunikationsnetz 60 kann z.B. ein Mobilfunknetz, wie ein terrestrisches Mobilfunknetz, beispielsweise ein GSM- (Global System for Mobile communication) und/oder ein UMTS- (Universal Mobile Telephone System) und/oder ein satellitenbasiertes Mobilfunknetz und/oder WLAN (Wireless Local Area Network) wie z.B. Bluetooth, ein oder mehrere Festnetze wie beispielsweise das öffentliche geschaltete Telefonnetz (PSTN), das weltweite Internet oder ein geeignetes LAN (Local Area Network) oder WAN (Wide Area Network) umfassen. Die Kommunikation über das Kommunikationsnetz 60 kann beispielsweise mittels speziellen Kurzmeldungen, z.B. SMS (Short Message Services), EMS (Enhanced Message Services), über einen Signalisierungskanal, wie z.B. USSD (Unstructured Supplementary Services Data) oder andere Techniken, wie MExE (Mobile Execution Environment), GPRS (Generalized Packet Radio Service), WAP (Wireless Application Protocol) oder UMTS (Universal Mobile Telecommunications System) oder über einen Nutzkanal erfolgen. Die Übermittlung kann periodisch oder getriggert durch ein Datenerfassungsmodul des Fahrzeuges 52/53/54 und/oder der Zentraleinheit 30 erfolgen. Als Trigger kann z.B. der Fall verwendet werden, wo neue Daten registriert und/oder Daten zu einer Auswertung z.B. in der Zentraleinheit 30 benötigt werden. Das Fahrzeug 52/53/54 kann Mittel zur Positionsbestimmung, wie z.B. ein GPS-Modul (Global Positioning System), umfassen. Damit kann die Position des Fahrzeuges jederzeit über das Mobilfunknetz 60 bei der Zentraleinheit 30 aktualisiert werden. Die Position des Fahrzeuges kann aber auch z.B. mittels Triangulationsverfahren vom Mobilfunknetz 60 bestimmt werden und bei Bedarf durch die Zentraleinheit 30 aktualisiert werden. Jedes Fahrzeug 52/53/54 umfasst eine eindeutige Fahrzeugidentifizierung. Die Fahrzeugidentifizierung der Fahrzeug 52/53/54 kann beispielsweise eine International Mobile Subscriber Identity (IMSI) oder eine MSISDN (Mobile Subscriber ISDN), die zur Identifizierung in einem Mobilfunknetz dienen, umfassen und beispielsweise in einer Chipkarte der Kommunikationsmittel 57, beispielsweise eine SIM-Karte (Subscriber Identification Module), gespeichert sein. Um den Betriebszustand vor der Benutzung sicherzustellen, kann die Zentraleinheit 30 z.B. mittels SMS vor der Freigabe zur Benutzung über das Onboardsystem 55 des Fahrzeuges 52/53/54 den Betriebszustand des Fahrzeuges 52/53/54 überprüfen. Es ist aber auch möglich, dass das Onboardsystem 55 den Betriebszustand des Fahrzeuges 52/53/54 periodisch und/oder auf Anfrage der Zentraleinheit 30 überprüft, wobei Betriebszustandsdaten des jeweiligen Fahrzeuges auf der Datenbank 31 der Zentraleinheit 30 aktualisiert werden. Mit einem solchen System und Verfahren verfügt die Zentraleinheit 30 stets über aktuelle Daten betreffend die Fahrzeuge 52/53/54 des Fahrzeugreservationssystem. Zur Reservation identifiziert sich ein Benutzer 10 über Eingabeelemente einer mit der Zentraleinheit 30 verbundenen Recheneinheit 20 bei der Zentraleinheit 30 und reserviert ein Fahrzeug 52/53/54 für einen bestimmbaren Zeitpunkt und/oder Zeitspanne und/oder Ort, wobei die zu dem bestimmbaren Zeitpunkt und/oder Zeitspanne und/oder Ort verfügbaren Fahrzeuge 52/53/54 von der Zentraleinheit 30 dem Benutzer 10 über die Recheneinheit 20 angegeben werden. Die Recheneinheit 20 kann z.B. über ein oder mehrere Computernetzwerke 62 mit der Zentraleinheit 30 bzw. mit einem Parkplatzreservationsmodul 36 der Zentraleinheit 30 kommunizieren. Die Recheneinheit 20 kann ein beliebiges mobiles und/oder nicht mobiles Customer Premise Equipment (CPE) sein, wie z.B. ein PDA, Mobilfunkgerät wie ein Mobilfunktelefon, Laptop, PC (Personal Computer) etc.. Die Downloadmechanismen zur Recheneinheit 20 können auch DAB/MExE-Applets umfassen. Die Recheneinheit 20 umfasst entsprechende physikalische Netzwerkschnittstellen, z.B. Schnittstellen zu Ethernet oder einem anderen Wired LAN (Local Area Network), Bluetooth, GSM (Global System for Mobile Communication), GPRS (Generalized Packet Radio Service), USSD (Unstructured Supplementary Services Data), UMTS (Universal Mobile Telecommunications System) und/oder WLAN (Wireless Local Area Network) etc.. Die software- und/oder hardwaremässige Schnittstelle kann z.B. einen Adapter umfassen, welcher einen Sender/Empfänger sowie eine Kontrollkarte umfasst (wie z.B. Infrarot(IR)-Adapter oder einen Tieffrequenzradiowellen-Adapter etc.). Werden als Recheneinheiten 20 mobile Systeme verwendet, können sie zur Anbindung an die erwähnten Netzwerke z.B. mittels Radiofrequenzsignalen mit sog. Access Points (WLANs) oder sog. BTS (Base Tranceiver Station) (Mobilfunknetzwerken) kommunizieren. Über die Schnittstelle kann die Übermittlung der Daten z.B. mittels eines TCP/IP-Interface und/oder CORBA-Interface, eines ATM-Moduls, eines SMS- und/oder USSD-Gateways mittels speziellen Kurzmeldungen, beispielsweise SMS- (Short Message Services), USSD- (Unstructured Supplementary Services Data) Meldungen oder andere Techniken wie MExE (Mobile Execution Environment), über Protokolle wie GPRS (Generalized Packet Radio Service), WAP (Wireless Application Protokoll) oder über einen Nutzkanal erfolgen. Die Benutzeridentifizierung des Benutzers 10 der Recheneinheit 20 kann beispielsweise einer eindeutigen Kundenadresse entsprechen oder einer anderen Benutzeridentifizierung für andere Systeme, beispielsweise eine International Mobile Subscriber Identity (IMSI) oder eine MSISDN (Mobile Subscriber ISDN), die zur Identifizierung in einem Mobilfunknetz dient, und welche Benutzeridentifizierung beispielsweise in der Chipkarte, beispielsweise eine SIM-Karte (Subscriber Identification Module), gespeichert ist. Die Benutzeridentifizierung kann auch automatisch, z.B. mittels Anschlusserkennung der Recheneinheit 20, beispielsweise im Falle des Mobilfunkgerätes, erfolgen. War die Mietung bzw. Reservierung mittels der Recheneinheit 20 durch den Benutzer 10 bei der Zentraleinheit 30 erfolgreich, übermittelt ein SMS-Modul 33 der Zentraleinheit 30 einen Identifikationscode 411 mittels einer SMS- und/oder USSD-Datenmeldung 41 über ein Mobilfunknetz 61 an ein Mobilfunkgerät 40 des Benutzers 10. Das SMS-Modul 33 der Zentraleinheit 30 kann den Identifikationscode 411 z.B. erst innerhalb einer vorgegebenen Zeitspanne vor Beginn der gewünschten Benutzung mittels der SMS 41 an das Mobilfunkgerät 40 des Benutzers 10 übermitteln. Damit kann der Benutzer nicht nur innerhalb eines sinnvollen Zeitrahmens vor der Benutzung an die Reservation erinnert werden, sondern z.B. kann auch die Gefahr reduziert werden, dass die SMS zwischenzeitlich durch den Benutzer z.B. aus Speichermangel auf der SIM-Karte des Mobilfunkgerätes oder irrtümlicherweise gelöscht wird. Zusätzlich kann die Zentraleinheit 30 dem Benutzer 10 eine Bestätigung der Reservation auf die Recheneinheit 20 übermitteln. Die MSISDN des Mobilfunkgerätes 40 wurde vom Benutzer 10 entweder bei der Reservierung übermittelt oder sie wurde bereits früher mit benutzerspezifischen Daten für die Zentraleinheit 30 zugreifbar erfasst und abgespeichert. Hat der Benutzer 10 als Recheneinheit 20 z.B. das Mobilfunkgerät 40 benutzt, kann die MSISDN als spezielle Ausführungsvariante z.B. auch mittels Anschlusserkennung etc. ermittelt werden. Der Benutzer 10 identifiziert sich zum vorbestimmten Zeitpunkt und/oder Ort bei einem Identifikationsmodul mittels des Identifikationscodes 411. Das Identifikationsmodul kann als ein Teil des Onboardsystems des Fahrzeuges 52/53/54, als Netzwerkkomponente des Kommunikationsnetzes 60 oder als ein Modul der Zentraleinheit 30 hardware- und/oder softwaremässig realisiert sein. Das Identifikationsmodul überprüft den Identifikationscode 411 bei der Zentraleinheit 30, wobei das Fahrzeug 54 bei erfolgter Identifikation des Benutzers 10 über die Kommunikationsmittel 57 und das Onboardsystem 55 des Fahrzeuges 52/53/54 zur Benutzung freigegeben wird. Das Identifikationsmodul und das SMS/USSD-Modul 33 können software- und/oder hardwaremässig realisiert sein. Die Identifikation kann entweder dadurch geschehen, dass eine Antwort-SMS, die mindestens den Identifikationscode 411 umfasst, zur Bestätigung vom Mobilfunkgerät 40 über das Mobilfunknetz 61 an die Zentraleinheit 30 zurückgeschickt wird. Mittels der Antwort-SMS wird der Benutzer 10 vom Identifikationsmodul identifiziert und die Zentraleinheit 30 gibt das Fahrzeug 52/53/54 zum bestimmten Zeitpunkt und/oder Zeitspanne und/oder Ort zur Benutzung frei. Oder als andere Möglichkeit kann die Identifikation auch dadurch geschehen, dass sich der Benutzer 10 mittels des Identifikationscode 411 direkt beim Identifikationsmodul identifiziert, wobei jedes Fahrzeug 52/53/54 des Fahrzeugreservationssystems bzw. das jeweilige Onboardsystem 55 des Fahrzeuges 52/53/54 ein entsprechendes Identifikationsmodul umfasst. In diesem Fall kann die Eingabe des Identifikationscodes 411 bei dem Identifikationsmodul entweder manuell über Eingabeelemente des Identifikationsmoduls erfolgen und/oder beispielsweise über eine Infrarotschnittstelle oder irgendeine andere Schnittstelle (z.B. Bluetooth etc.) zwischen dem Mobilfunkgerät 40 und dem Identifikationsmodul erfolgen. In vielen Staaten bildet es eine rechtliche Voraussetzung, dass der Vermieter verpflichtet ist, den Mietkunden, d.h. den Benutzer 10 zu prüfen, ob er zum Zeitpunkt der Übergabe des Fahrzeuges im Besitz eines gültigen Führerausweises ist. Um eine vollständige Automatisierung des erfindungsgemässen Systems und/oder Verfahrens zu erreichen, kann das Fahrzeug in diesem Fall z.B. mit Mitteln zur Bild- und Tonübertragung, wie z.B. einem Videokonferenzsystem, ausgerüstet sein. Zusätzlich zum Identifikationscode kann damit mittels einer eingebauten Dokumentenkamera oder Dokumentenscannmodul, z.B. in Kombination mit OCR (Optical Character Recognition) die Gültigkeit des Führerausweises via die Kommunikationsmittel 60 bei der Zentraleinheit 30 überprüft werden. Bei modernen Führerausweisen, bei welchen die Informationen auf Chipkarten mit Speicherelementen, wie EEPROMs oder Magnetstreifen, abgespeichert sind, braucht es an Stelle der Dokumentenkamera und/oder Dokumentenscanneinheit lediglich eine Kartenlesevorrichtung zum Lesen der Führerausweischipkarte im Fahrzeug. Das Fahrzeug 52/53/54 wird in dieser Ausführungsvariante erst nach positiver Überprüfung des Identifikationscodes 411 und der Gültigkeit des Führerausweises zur Benutzung freigegeben.

Figur 2 zeigt zusätzlich zum Fahrzeugreservationssystem eine Ausführungsvariante, bei welcher sich ein Benutzer 10 bei einem Identifikationsmodul identifiziert, wobei die bezogene Leistung mittels eines Verrechnungsmoduls 34 der Zentraleinheit 30 über einen Dienstanbieter 70 eines Mobilfunknetzes 63 automatisch verrechnet wird. Das Verrechnungsmodul 34 kann ebenfalls hardwaremässig und/oder softwaremässig ausgeführt sein und ein Speichermodul zum Speichern von Daten, insbesondere zum Aufsummieren von durch den Benutzer bezogenen Leistungen, umfassen. Das Verrechnungsmodul 34 kann teilweise, wie z.B. in den Funktionen des Aufsummierens der bezogenen Leistung, auch als ein Teil des Mobilfunkgerätes 40 realisiert sein. In dieser Ausführungsvariante werden Verrechnungdaten mittels dem Verrechnungsmodul 34 berechnet und mittels einem Kommunikationsmodul der Zentraleinheit 30 von der Zentraleinheit 30/34 an ein Verrechnungsmodul 73, wie z.B. ein SAP-Modul, und/oder einen Dienstanbieter 70 eines Mobilfunknetzes 63 übermittelt. Die Verrechnungdaten umfassen dabei Kostenparameter zum Berechnen von Kostenbeträgen für die vom Benutzer 10 durch das gemietete Fahrzeug 54 bezogenen Leistungen. Die Verrechnungsdaten umfassen beispielsweise Start- und Endzeit oder Zeitdauer des Mietens sowie die Kosten pro Zeiteinheit etc. Die Verrechnung kann z.B. mittels eines dafür autorisierten Geldinstituts 71 und/oder irgendeinem Lastschriftverfahren 72 erfolgen. Diese Ausführungsvariante hat u.a. den Vorteil, dass die Kosten für die bezogenen Leistungen dem Benutzer 10 ohne grosse Formalitäten und verwaltungstechnischen Aufwand dem Benutzer 10 durch den Vermieter verrechnet werden können.

Zusätzlich zu dem oben erwähnten kann die Zentraleinheit 30 ein Parkplatzverwaltungsmodul 35 und ein Parkplatzreservationsmodul 36 umfassen. Der Benutzer macht dabei bei der Reservation des Fahrzeuges Angaben über seinen Zielort oder seine Zielorte, welche mittels der Recheneinheit 20 an die Zentraleinheit 30 übermittelt werden. In diesem Fall kann die SMS 41 Angaben 413 über einen oder mehrere freie und/oder reservierte Parkplätze am Zielort enthalten.

### Liste der Bezugszeichen

10 Benutzer
20 Recheneinheit
30 Zentraleinheit
31 Fahrzeugparkverwaltungsmodul
33 SMS-Modul
34 Verrechnungsmodul
35 Parklatzverwaltungsmodul
36 Parkplatzreservationsmodul
40 Mobilfunkgerät
41 SMS
   411 Identifikationscode
   412 Reservationsdaten
   413 Parkplatzreservationsdaten
50/51 Annahme-bzw. Abgabestelle für Fahrzeuge
52/53/54 Fahrzeuge
55 Onboardsystem
57 Kommunikationsmittel
60/61/62/63 Kommunikationsnetze
70 Mobilfunkdienstanbieter
71 Geldinstitut
72 Lastschriftverfahren
73 SAP-Modul

## Patentansprüche

1. Verfahren für ein computergestütztes Fahrzeugreservationssystem, bei welchem sich ein Benutzer (10) bei einem Identifikationsmodul identifiziert, das Identifikationsmodul die Identifikation bei einer Zentraleinheit (30) überprüft und das Fahrzeug (52/53/54) bei erfolgter Identifikation des Benutzers (10) über ein Onboardsystem (55) des Fahrzeuges (52/53/54) zur Benutzung freigegeben wird, **dadurch gekennzeichnet,**
**dass** die Zentraleinheit (30) alle Fahrzeuge (52/53/54) des Fahrzeugreservationssystems erfasst und zeitliche und/oder örtliche Verfügbarkeit der einzelnen Fahrzeuge (52/53/54) den Fahrzeugen (52/53/54) zugeordnet in ei ner Datenbank (31) abspeichert,
**dass** sich der Benutzer (10) über die Eingabeelemente einer mit der Zentraleinheit (30) verbundenen Recheneinheit (20) bei der Zentraleinheit (30) identifiziert und ein Fahrzeug (52/53/54) für einen bestimmbaren Zeitpunkt und/oder Zeitspanne und/oder Ort reserviert, welches Fahrzeug (52/53/54) von der Zentraleinheit (30) als zu dem bestimmbaren Zeitpunkt und/oder Zeitspanne und/oder Ort verfügbar angegeben wird,
**dass** ein SMS-Modul (33) der Zentraleinheit (30) einen Identifikationscode (411) mittels einer SMS (41) an ein Mobilfunkgerät (40) des Benutzers (10) über ein Mobilfunknetz (61) übermittelt, und
**dass** vom Benutzer (10) eine Antwort-SMS, die mindestens den Identifikationscode (411) umfasst, zur Bestätigung vom Mobilfunkgerät (40) über das Mobilfunknetz (61) an die Zentraleinheit (30) zurückgeschickt wird, mittels welcher Antwort-SMS der Benutzer (10) vom Identifikationsmodul identifiziert wird und mittels welcher Zentraleinheit (30) das Fahrzeug (52/53/54) über die Kommunikationsmittel (57) und das Onboardsystem (55) zum bestimmten Zeitpunkt und/oder Zeitspanne und/oder Ort zur Benutzung freigegeben wird.

2. Verfahren nach Anspruch 1, **dadurch gekennzeichnet, dass** die Zentraleinheit (30) mittels SMS vor der Freigabe zur Benutzung über das Onboardsystem (55) des Fahrzeuges (52/53/54) den Betriebszustand des Fahrzeuges (52/53/54) überprüft.

3. Verfahren nach einem der Ansprüche 1 oder 2, **dadurch gekennzeichnet, dass** das SMS-Modul (33) der Zentraleinheit (30) den Identifikationscode (411) innerhalb einer vorgegebenen Zeitspanne vor Beginn der gewünschten Benutzung mittels der SMS (41) an das Mobilfunkgerät (40) des Benutzers (10) übermittelt.

4. Verfahren nach einem der Ansprüche 1 bis 3, **dadurch gekennzeichnet, dass** die Zentraleinheit (30) dem Benutzer (10) eine Bestätigung der Reservation auf die Recheneinheit (20) übermittelt.

5. Verfahren nach einem der Ansprüche 1 bis 4, **dadurch gekennzeichnet, dass** das Onboardsystem (55) den Betriebszustand des Fahrzeuges (52/53/54) periodisch und/oder auf Anfrage der Zentraleinheit (30) überprüft, wobei die Daten der Datenbank (31) der Zentraleinheit (30) aktualisiert werden.

6. Verfahren nach einem der Ansprüche 1 bis 5, **dadurch gekennzeichnet, dass** Verrechnungdaten mittels eines Verrechnungsmoduls (34) der Zentraleinheit (30) berechnet werden und mittels einem Kommunikationsmodul der Zentraleinheit (30) von der Zentraleinheit (30, 34) an einen Dienstanbieter (70) eines Mobilfunknetzes (63) übermittelt werden, welche Verrechnungsdaten Kostenparameter zum Berechnen von Kostenbeträgen für die vom Benutzer (10) durch das gemietete Fahrzeug (54) bezogene Leistung umfassen.

7. Verfahren nach einem der Ansprüche 1 bis 6, **dadurch gekennzeichnet, dass** die SMS (41) weiter Fahrzeugbezeichnung (412) und/oder Ort (412) und/oder Zeitpunkt (412) und/oder Zeitspanne (412) umfasst.

8. Verfahren nach einem der Ansprüche 1 bis 7, **dadurch gekennzeichnet, dass** das Fahrzeug (54) in einem zutrittskontrollierten Bereich geparkt ist, wobei der Benutzer (10) sich beim Betreten des zutrittskontrollierten Bereichs mittels des Identifikationcodes (411) bei einem Identifikationsmodul des zutrittskontrollierten Bereichs identifiziert.

9. Verfahren nach einem der Ansprüche 1 bis 8, **dadurch gekennzeichnet, dass** das Mobilfunkgerät (40) als Recheneinheit (20) verwendet wird.

10. Verfahren nach einem der Ansprüche 1 bis 9, **dadurch gekennzeichnet, dass** die Recheneinheit (20) über ein oder mehrere Computernetzwerke (62) mit der Zentraleinheit (30) kommuniziert.

11. Verfahren nach Anspruch 10, **dadurch gekennzeichnet, dass** ein oder mehrere Computernetzwerke (62) das Internet umfassen.

12. Verfahren nach einem der Ansprüche 10 oder 11, **dadurch gekennzeichnet, dass** der Benutzer zur Identifikation bei der Zentraleinheit (30) die MSISDN des Mobilfunkgerätes (10) angibt.

13. Verfahren nach einem der Ansprüche 1 bis 12, **dadurch gekennzeichnet, dass** die Zentraleinheit (30) ein Parkplatzverwaltungsmodul (35) und ein Parkplatzreservationsmodul (36) umfasst, wobei bei der Reservation des Fahrzeuges Angaben über einen Zielort mittels der Recheneinheit (20) an die Zentraleinheit (30) übermittelt werden und/oder die SMS (41) Angaben (413) über einen reservierten Parkplatz am Zielort enthält.

14. Computergestütztes Fahrzeugreservationssystem, welches Identifikationsmodule zur Identifizierung eines Benutzers (10) bei einer Zentraleinheit (30) umfasst, wobei jeweils ein Identifikationsmodul einem Fahrzeug (52/53/54) zugeordnet ist und wobei das Fahrzeug durch die Zentraleinheit (30) bei erfolgreicher Identifikation über ein Onboardsystem (55) des Fahrzeuges (52/53/54) zur Benutzung freischaltbar ist, **dadurch gekennzeichnet,**
**dass** die Zentraleinheit (30) ein Speichermodul (31) umfasst, mittels welchem alle Fahrzeuge (52/53/54) des Fahrzeugreservationssystems erfassbar sind und zeitliche und/oder örtliche Verfügbarkeit der einzelnen Fahrzeuge (52/53/54) den Fahrzeugen (52/53/54) zugeordnet abspeicherbar sind,
**dass** die Zentraleinheit ein SMS-Modul (33) umfasst zum Übermitteln eines Identifikationscodes (411) mittels einer SMS (41) an ein Mobilfunkgerät (40) des Benutzers (10) über ein Mobilfunknetz (61),
**dass** das System eine Recheneinheit (20) umfasst mit Kommunikationsmitteln zum Bestellen und/oder Reservieren eines Fahrzeuges (52/53/54) für einen bestimmbaren Zeitpunkt und/oder Zeitspanne und/oder Ort, wobei das Fahrzeug (52/53/54) von der Zentraleinheit (30) als zu dem bestimmbaren Zeitpunkt und/oder Zeitspanne und/oder Ort verfügbar angegeben wird,
**dass** der Benutzer (10) mittels einer SMS des Mobilfunkgeräts (40), die mindestens den Identifikationscode (411) umfasst, vom Identifikationsmodul identifizierbar ist und das Fahrzeug zum bestimmten Zeitpunkt und/oder Zeitspanne und/oder Ort zur Benutzung durch die Zentraleinheit (30) über die Kommunikationsmittel (57) und das Onboardsystem (55) des Fahrzeuges (52/53/54) freischaltbar ist.

15. Computergestütztes Fahrzeugreservationssystem nach Anspruch 14, **dadurch gekennzeichnet, dass** die Zentraleinheit (30) ein Verrechnungsmodul (34) umfasst, mittels welchem Verrechnungdaten von der Zentraleinheit (30, 34) an einen Dienstanbieter (70) eines Mobilfunknetzes (63) übermittelbar sind und welche Verrechnungdaten Kostenparameter umfassen, basierend auf welchen Kostenbeträgen für die vom Benutzer (10) durch das gemietete Fahrzeug (54) bezogenen Leistung berechenbar sind.

16. Computergestütztes Fahrzeugreservationssystem nach einem der Ansprüche 14 oder 15, **dadurch gekennzeichnet, dass** die SMS (41) weiter Fahrzeugbezeichnung (412) und/oder Ort (412) und/oder Zeitpunkt (412) und/oder Zeitspanne (412) umfasst.

17. Computergestütztes Fahrzeugreservationssystem nach einem der Ansprüche 14 bis 16, **dadurch gekennzeichnet, dass** das System zutrittskontrollierte Bereiche zum Parkieren der verfügbaren Fahrzeuge (52/53/54) umfasst, wobei der zutrittskontrollierte Bereich vom Benutzer (10) mittels des Identifikationcodes (411) betretbar ist.

18. Computergestütztes Fahrzeugreservationssystem nach einem der Ansprüche 14 bis 17, **dadurch gekennzeichnet, dass** das Mobilfunkgerät (40) ebenfalls die Recheneinheit (20) umfasst.

19. Computergestütztes Fahrzeugreservationssystem nach einem der Ansprüche 14 bis 18, **dadurch gekennzeichnet, dass** das System ein oder mehrere Computernetzwerke (62) umfasst, welche die Recheneinheit (20) mit der Zentraleinheit (30) verbinden.

20. Computergestütztes Fahrzeugreservationssystem nach Anspruch 19, **dadurch gekennzeichnet, dass** das Computernetzwerk das Internet umfasst.

21. Computergestütztes Fahrzeugreservationssystem nach einem der Ansprüche 19 oder 20, **dadurch gekennzeichnet, dass** die Identifikation des Benutzers bei der Zentraleinheit (30) die MSISDN des Mobilfunkgerätes (10) umfasst.

## Claims

1. Method for a computer-supported vehicle reservation system in which a user (10) identifies himself at an identification module, the identification module checks the identification with a central unit (30), and, with successful identification of the user, the vehicle (52/53/54) is cleared for use via an onboard system (55) of the vehicle (52/53/54), **characterised**
**in that** the central unit (30) registers all vehicles (52/53/54) of the vehicle reservation system, and stores, assigned to the vehicles, in a database (31) temporal and/or local availability of the individual vehicles (52/53/54),
**in that** the user (10) identifies himself at the central unit (30) via the input elements of a computing unit (20) connected to the central unit (30), and reserves a vehicle (52/53/54) for a definable time and/or time span and/or location, which vehicle (52/53/54) is indicated by the central unit (30) as available for the definable time and/or time span and/or location,
**in that** an SMS module (33) of the central unit (30) transmits an identification code (411) to a mobile radio device (40) of the user (10) by means of an SMS (41) over a mobile radio network (61), and
**in that** a reply SMS from the user (10), comprising at least the identification code (411), is sent back by the mobile radio device (40) over the mobile radio network (61) to the central unit (30) as a confirmation, by means of which reply SMS the user is identified by the identification module, and by means of which central unit (30) the vehicle (52/53/54) is cleared for use via the communication means (57) and the onboard system (55) for the defined time and/or time span and/or location.

2. Method according to claim 1, **characterised in that** the central unit (30) checks via the onboard system (55) of the vehicle (52/53/54) the operational condition of the vehicle (52/53/54) by means of SMS before clearance for use.

3. Method according to one of the claims 1 or 2, **characterised in that** the SMS module (33) of the central unit (30) transmits the identification code (411) by means of the SMS (41) to the mobile radio device (40) of the user (10) within a predetermined time span before beginning of the desired use.

4. Method according to one of the claims 1 to 3, **characterised in that** the central unit (30) transmits to the user (10) a confirmation of the reservation on the computing unit (20).

5. Method according to one of the claims 1 to 4, **characterised in that** the onboard system (55) checks the operational condition of the vehicle (52/53/54) periodically and/or upon request of the central unit (30), the data of the database (31) of the central unit (30) being updated.

6. Method according to one of the claims 1 to 5, **characterised in that** billing data are computed by means of a billing module (34) of the central unit (30), and are transmitted from the central unit (30, 34) to a service provider (70) of a mobile radio network (63) by means of a communication module of the central unit (30), which billing data include cost parameters for calculating cost amounts for the service procured by the user (10) through the leased vehicle (54).

7. Method according to one of the claims 1 to 6, **characterised in that** the SMS (41) further comprises vehicle designation (412) and/or location (412) and/or time (412) and/or time span (412).

8. Method according to one of the claims 1 to 7, **characterised in that** the vehicle (54) is parked in an access-controlled area, the user (10) identifying himself at an identification module of the access-controlled area upon entering the access-controlled area by means of the identification code (411).

9. Method according to one of the claims 1 to 8, **characterised in that** used as computing unit (20) is the mobile radio device (40).

10. Method according to one of the claims 1 to 9, **characterised in that** the computing unit (20) communicates with the central unit (30) via one or more computer networks (62).

11. Method according to claim 10, **characterised in that** one or more computer networks (62) include the Internet.

12. Method according to one of the claims 10 or 11, **characterised in that** the user indicates the MSISDN of the mobile radio device (10) for identification at the central unit (30).

13. Method according to one of the claims 1 to 12, **characterised in that** the central unit (30) comprises a parking space administration module (35) and a parking space reservation module (36), whereby during the reservation of the vehicle indications about a destination being transmitted to the central unit (30) by means of the computing unit (20) and/or the SMS (41) contains indications (413) about a reserved parking space at the destination.

14. Computer-supported vehicle registration system, which comprises identification modules for identification of a user (10) at a central unit (30), in each case an identification module being assigned to a vehicle (52/53/54) and, with successful identification, the vehicle being clearable by the central unit (30) for use via an onboard system (55) of the vehicle (52/53/54), **characterised**
**in that** the central unit (30) comprises a memory module (31), by means of which all vehicles (52/53/54) of the vehicle reservation system are able to be registered, and temporal and/or local availability of the individual vehicles (52/53/54) is storable, assigned to the vehicles (52/53/54),
**in that** the central unit comprises an SMS module (33) for transmitting an identification code (411) by means of an SMS (41) to a mobile radio device (40) of the user (10) via a mobile radio network (61),
**in that** the system comprises a computing unit (20) with communication means for ordering and/or reserving a vehicle (52/53/54) for a definable time and/or time span and/or location, the vehicle (52/53/54) being indicated by the central unit (30) as available at the definable time and/or time span and/or location,
in the that user (10) is identifiable by the identification module by means of an SMS of the mobile radio device (40), which comprises at least the identification code (411), and the vehicle is clearable by the central unit (30) for use at the defined time and/or time span and/or location via the communication means (57) and the onboard system (55) of the vehicle (52/53/54).

15. Computer-supported vehicle registration system according to claim 14, **characterised in that** the central unit (30) comprises a billing module (34) by means of which billing data are transmittable from the central unit (30, 34) to a service provider (70) of a mobile radio network (63), and which billing data include cost parameters, based on which cost amounts are calculable for the service procured by the user through the leased vehicle (54).

16. Computer-supported vehicle registration system according to one of the claims 14 or 15, **characterised in that** the SMS (41) further comprises vehicle designation (412) and/or location (412) and/or time (412) and/or time span (412).

17. Computer-supported vehicle registration system according to one of the claims 14 to 16, **characterised in that** the system comprises access-controlled areas for parking of the available vehicles (52/53/54), the access-controlled area being accessible to the user (10) by means of the identification code (411).

18. Computer-supported vehicle registration system according to one of the claims 14 to 17, **characterised in that** the mobile radio device (40) also comprises the computing unit (20).

19. Computer-supported vehicle registration system according to one of the claims 14 to 18, **characterised in that** the system comprises one or more computer networks (62), which connect the computing unit (20) to the central unit (30).

20. Computer-supported vehicle registration system according to claims 19, **characterised in that** the computer network comprises the Internet.

21. Computer-supported vehicle registration system according to one of the claims 19 or 20, **characterised in that** the identification of the user at the central unit (30) comprises the MSISDN of the mobile radio device (10).

## Revendications

1. Procédé pour un système de réservation de véhicules assistés par ordinateur, où un utilisateur (10) s'identifie auprès d'un module d'identification, module d'identification qui vérifie l'identification auprès d'une unité centrale (30) et le véhicule (52/53/54) est autorisé à l'utilisation lors de l'identification effectuée de l'utilisateur (10) par un système embarqué (55) du véhicule (52/53/54), **caractérisé en ce que**
l'unité centrale (30) saisit tous les véhicules (52/53/54) du système de réservation de véhicule et associe à la disponibilité locale et/ou temporelle de chacun des véhicules (52/53/54) aux véhicules (52/53/54) et la stocke dans une banque de données (31),
**en ce que** l'utilisateur (10) s'identifie par les éléments de saisie d'une unité de calcul (20) reliée à l'unité centrale (30) auprès de l'unité centrale (30) et réserve un véhicule (52/53/54) pour un horaire et/ou une période et/ou un lieu déterminables, lequel véhicule (52/53/54) étant indiqué comme disponible par l'unité centrale (30) au moment et/ou la période et/ou au lieu déterminable,
**en ce qu'**un module SMS (33) de l'unité centrale (30) transmet un code d'identification (411) au moyen d'un SMS (41) à un périphérique de téléphonie cellulaire mobile (40) de l'utilisateur (10) par l'intermédiaire d'un réseau de téléphonie cellulaire mobile (61), et
**en ce que** l'utilisateur (10) envoie une réponse par SMS qu comprend au moins un code d'identification (411), pour la confirmation du périphérique de téléphonie cellulaire mobile (40) par le réseau de téléphonie cellulaire mobile (61) à l'unité centrale (30) réponse par SMS au moyen de laquelle l'utilisateur (10) est identifié par le module d'identification et, unité centrale (30) au moyen de laquelle le véhicule (52/53/54) est disponibilisé à l'utilisation par les moyens de communication (57) et le système embarqué (55) au moment et/ou la période et/ou au lieu déterminé.

2. Procédé selon la revendication 1, **caractérisé en ce que** l'unité centrale (30) vérifie l'état du véhicule (52/53/54) au moyen de SMS avant l'autorisation d'utilisation par l'intermédiaire du système embarqué (55) du véhicule (52/53/54).

3. Procédé selon l'une des revendications 1 ou 2, **caractérisé en ce que** le module SMS (33) de l'unité centrale (30) transmet le code d'identification (411) à l'intérieur d'une période de temps prédéterminée avant le début de l'utilisation souhaitée au moyen du SMS (41) au périphérique de téléphonie cellulaire mobile (40) de l'utilisateur (10).

4. Procédé selon l'une des revendications 1 à 3, **caractérisé en ce que** l'unité centrale (30) transmet à l'utilisateur (10) une confirmation de la réservation sur l'unité de calcul (20).

5. Procédé selon l'une des revendications 1 à 3, **caractérisé en ce que** le système embarqué (55) vérifie l'état de fonctionnement du véhicule (52/53/54) périodiquement et/ou sur la demande de l'unité centrale (30), les données de la banque de données (31) de l'unité centrale (30) étant actualisées.

6. Procédé selon l'une des revendications 1 à 5, **caractérisé en ce que** des données de facturation sont calculées au moyen d'un module de facturation (34) de l'unité centrale (30) et sont transmises au moyen d'un module de communication de l'unité centrale (30) par l'unité centrale (30, 34) à un prestataire de services (70) d'un réseau de téléphonie cellulaire mobile (63), données de facturation qui comprennent des paramètres de coûts pour le calcul de montants de frais pour la prestation obtenue par l'utilisateur (10) du véhicule loué (54).

7. procédé selon l'un des revendications 1 à 6, **caractérisé en ce que** les SMS (41) comprennent en outre la désignation de véhicule (412) et/ou le lieu (412) et/ou le moment (412) et/ou la période (412).

8. Procédé selon l'une des revendications 1 à 7, **caractérisé en ce que** le véhicule (54) est garé dans une zone à accès contrôlé, l'utilisateur (10) s'identifiant lors du franchissement de la zone à accès contrôlé (411) auprès d'un module d'identification de la zone à accès contrôlé.

9. Procédé selon l'une des revendications 1 à 8, **caractérisé en ce que** le périphérique de téléphonie cellulaire mobile (40) est utilisé comme une unité de calcul (20).

10. Procédé selon l'une des revendications 1 à 9, **caractérisé en ce que** l'unité de calcul (20) communique par un ou plusieurs réseaux informatiques (62) avec l'unité centrale (30).

11. Procédé selon la revendication 10, **caractérisé en ce qu'**un ou plusieurs réseaux informatiques (62) comprennent l'Internet.

12. Procédé selon l'une des revendications 10 ou 11, **caractérisé en ce que** l'utilisateur indique pour l'identification auprès de l'unité centrale (30) le MSISDN (Mobile Station ISDN Number = numéro de mobile appelant) du périphérique de téléphonie cellulaire mobile (10).

13. Procédé selon l'une des revendications 1 à 12, **caractérisé en ce que** l'unité centrale (30) comprend un module de gestion de place de parking (35), et un module de réservation de place de parking (36), lors de la réservation du véhicule, des indications sur le lieu étant transmises au moyen de l'unité de calcul (20) à l'unité centrale (30) et/ou le SMS (41) comprend des indications (413) sur une place de parking réservée au lieu de destination.

14. Système de réservation de véhicules assisté par ordinateur, lequel comprend des modules d'identification pour l'identification d'un utilisateur (10) auprès d'une unité centrale (30), respectivement un module d'identification étant associé à un véhicule (52/53/54) et le véhicule étant autorisé à l'utilisation lors de l'identification réussie par l'unité centrale (30) par un système embarqué (55) du véhicule (52/53/54), **caractérisé en ce que**
l'unité centrale (30) comprend un module de mémoire (31) au moyen duquel tous les véhicules (52/53/54) du système de réservation de véhicule sont saisissables et une disponibilité temporelle ou géographique de chacun des véhicules (52/53/54) est associée aux véhicules (52/53/54) et stockée,
**en ce que** l'unité centrale comprend un module SMS (33) pour la transmission d'un code d'identification (411) au moyen d'un SMS (41) à un périphérique de téléphonie cellulaire mobile (40) de l'utilisateur (10) par un réseau de téléphonie cellulaire mobile (61),
**en ce que** le système comprend une unité de calcul (20) avec des moyens de communication pour la commande et/ou la réservation d'un véhicule (52/53/54) pour un horaire et/ou une période et/ou un lieu déterminables, le véhicule (52/53/54) étant indiqué comme disponible par l'unité centrale (30) pour un horaire et/ou une période et/ou un lieu déterminables,
**en ce que** l'utilisateur (10) est identifiable par le module d'identification au moyen d'un SMS du périphérique de téléphonie cellulaire mobile (40) qui comprend au moins le code d'identification (411) et le véhicule est autorisé à l'utilisation à un temps et/ou une période et/ou un lieu déterminés par l'unité centrale (30) par l'intermédiaire des moyens de communication (57) et le système embarqué (55) du véhicule (52/53/54).

15. Système de réservation de véhicules assisté par ordinateur selon la revendication 14, **caractérisé en ce que** l'unité centrale (30) comprend un module de facturation (34) au moyen duquel des données de facturation sont transmettables à un prestataire de services (70) d'un réseau de téléphonie cellulaire mobile (63) et données de facturation qui comprennent des paramètres de frais sur la base desquels des montants de frais pour la prestation obtenue par l'utilisateur (10) par le biais du véhicule loué (54) sont calculés,

16. Système de réservation de véhicules assisté par ordinateur selon l'une des revendications 14 ou 15, **caractérisé en ce que** le SMS (41) comprend en outre la désignation de véhicule (412) et/ou le lieu (412) et/ou le moment (412) et/ou la période (412).

17. Système de réservation de véhicules assisté par ordinateur selon l'une des revendications 14 à 16, **caractérisé en ce que** le système comprend des zones à accès contrôlé pour le parking des véhicules disponibles (52/53/54), la zone à accès contrôlé étant accessible par l'utilisateur (10) au moyen du code d'identification (411).

18. Système de réservation de véhicules assisté par ordinateur selon l'une des revendications 14 à 16, **caractérisé en ce que** le périphérique de téléphonie cellulaire mobile (40) comprend également l'unité de calcul (20).

19. Système de réservation de véhicules assisté par ordinateur selon l'une des revendications 14 à 18, **caractérisé en ce que** le système comprend un ou plusieurs réseaux d'ordinateurs (62) qui relient l'unité de calcul (20) à l'unité centrale (30).

20. Système de réservation de véhicules assisté par ordinateur selon la revendication 19, **caractérisé en ce que** le réseau d'ordinateurs comprend l'Internet.

21. Système de réservation de véhicules assisté par ordinateur selon l'une des revendications 19 ou 20, **caractérisé en ce que** l'identification de l'utilisateur auprès de l'unité centrale (30) comprend le MSISDN (Mobile Station ISDN Number = numéro de mobile appelant) du périphérique de téléphonie cellulaire mobile (10).
